# EUROPÄISCHE PATENTANMELDUNG

(11) **EP 2 902 591 A1**
(43) Veröffentlichungstag der Anmeldung: **05.08.2015**
(21) Anmeldenummer: 14153306.7
(22) Anmeldetag: 30.01.2014
(51) Int. Cl.: F01D 11/16, F16J 15/16, F01D 5/20

(54) **Laufschaufel für eine axiale Strömungsmaschine**

(71) Anmelder: Siemens Aktiengesellschaft, 80333 München (DE)
(72) Erfinder: Ahmad, Fathi, 41564 Kaarst (DE); Kurt, Nihal, 40231 Düsseldorf (DE)

(57) **Zusammenfassung**

Die Erfindung betrifft eine Laufschaufel (14) für eine axial durchströmte Strömungsmaschine, umfassend einen Schaufelfuß zur Befestigung der Laufschaufel (14) an einem Schaufelträger der Strömungsmaschine und umfassend ein aerodynamisch gekrümmtes Schaufelblatt (12), welches sich in Spannweiterichtung von einem fußseitigen Ende zu einer frei endenden Schaufelspitze (10) und in eine quer dazu angeordnete Umströmungsrichtung sich von einer Vorderkante (16) zu einer Hinterkante (18) erstreckt, wobei die Schaufelspitze (10) eine - im Bezug auf die Einbaulage der Laufschaufel (14) - radial nach außen weisende Blattspitzenfläche (26) aufweist, in der zumindest eine Hinterschneidungen (36a, 36b) aufweisende Nut (28) ist, wobei die Nut (28) sich zumindest teilweise zwischen der Vorderkante (16) und der Hinterkante (18) erstreckt und in der eine Anzahl von Dichtelementen (30) angeordnet ist. Um eine langlebige und verschleißarme Laufschaufel (14) anzugeben, deren Einsatz weiterhin zu geringen Radialspaltverlusten führt, ist vorgesehen, dass die Dichtelemente (30) Fliehkrafteinwirkung aus der Nut (28) herausragend von den Hinterschneidungen (36a, 36b) radial gehalten sind, wobei die Dichtelemente (30) und die Nut (28) geometrisch derart aufeinander abgestimmt sind, dass die Dichtelemente (30) aus dieser Lage in Richtung des Schaufelfußes bewegbar sind.

## Beschreibung

Die Erfindung betrifft eine Laufschaufel für eine axiale Strömungsmaschine, umfassend einen Schaufelfuß zur Befestigung der Schaufel an einem Schaufelträger der Strömungsmaschine und umfassend ein aerodynamisch gekrümmtes Schaufelblatt, welches sich in Spannweiterichtung von einem schaufelfußseitigen Ende zu einer frei endenden Schaufelspitze und in einer quer dazu angeordneten Umströmungsrichtung sich von einer Vorderkante zu einer Hinterkante erstreckt, wobei die Schaufelspitze eine - im Bezug auf die Einbaulage der Laufschaufel - radial nach außen weisendende Blattspitzenfläche aufweist, in der eine Hinterschneidungen aufweisende Nut vorgesehen ist, die sich zumindest teilweise zwischen der Vorderkante und der Hinterkante erstreckt und in der eine Anzahl von Dichtelementen angeordnet ist.

Derartige Laufschaufeln sind aus dem Stand der Technik vielfach bekannt. Sie werden eingesetzt, um Radialspaltverluste in den Strömungsmaschinen zu vermindern, welche zwischen einer Ringwand und der Schaufelspitze beim Betrieb der Strömungsmaschine in Form von Leckageströmungen auftreten können.

Im Stand der Technik sind die Dichtelemente zumeist als Borsten einer Bürstendichtung ausgestaltet, die im Anstreifkontakt mit der Ringwand jedoch plastisch deformieren und somit umgebogen werden, was dazu führt, dass bei zunehmender Betriebsdauer und steigender Anzahl an Anstreifereignissen die Dichtwirkung abnimmt.

Aufgabe der Erfindung ist daher die Bereitstellung einer Laufschaufel für eine axiale Strömungsmaschine, die einerseits eine nur geringe Leckageströmung zulässt und gleichzeitig vergleichsweise langlebig ist.

Die auf die Erfindung gerichtete Aufgabe wird durch eine Laufschaufel gemäß den Merkmalen des Anspruchs 1 gelöst. Vorteilhafte Ausgestaltungen der Laufschaufel sind in den abhängigen Ansprüchen angegeben.

Erfindungsgemäß ist vorgesehen, dass die eingangs bezeichnete Laufschaufel Dichtelemente aufweist, die unter Fliehkrafteinwirkung aus der Nut herausragend von den Hinterschneidungen radial gehalten sind, wobei die Dichtelemente und die Nut geometrisch derart aufeinander abgestimmt sind, dass die Dichtelemente aus dieser Lage in Richtung des Schaufelfußes bewegbar sind.

Insofern wird mit der Erfindung eine Laufschaufel bereitgestellt, die im Falle des Anstreifens es ihren Dichtelementen ermöglicht, in Richtung des Schaufelfußes auszuweichen. Mit anderen Worten, beim Anstreifen der Dichtelemente an der Ringwand werden die Dichtelemente entgegen der Fliehkraft in das Innere der Nut gedrückt, so dass Verschleiß an den Dichtelementen verringert werden kann. Dies kommt einer federnden Lagerung gleich, da diese Dichtelemente in einer Laufschaufel verwendet werden, die im bestimmungsgemäßen Betrieb der Wirkung von Fliehkraft ausgesetzt sind und somit die Dichtelemente radial nach außen streben. Letzteres gilt aber auch nur, wenn gleichzeitig in der Nut ein Freiraum für die Dichtelemente vorhanden ist, in den die Dichtelemente bei Kontakt von außen - sozusagen nach innen - ausweichen können.

Mithin ermöglicht die Erfindung das Ausweichen der Dichtelemente in einen eigens dafür vorgesehenen Hohlraum, welcher als Bestandteil des Nuthohlraums ausgebildet ist. Das Ausweichen der Dichtelemente wird dann erforderlich, wenn aufgrund unterschiedlicher thermischer Dehnungen von Rotorkomponenten und Gehäusekomponenten der Radialspalt zwischen den Dichtelementen und der ihr gegenüberliegenden Ringwand zeitweise verschwunden ist, so dass es während der Rotation des Rotors zu einem Anstreifen der Dichtelementen an einer oder mehreren Stellen der Ringwand kommen kann. Aufgrund des Anstreifens und des in der Nut vorhandenen Freiraums können die Dichtelemente in den besagten Freiraum eintauchen, so dass ein Umbiegen, wie es im Stand der Technik bekannt ist, vermieden wird. Dadurch sollte Verschleiß an den Dichtelementen vermindert werden unter Aufrechterhaltung einer vergleichsweise effizienten Dichtwirkung, was die Verluste an Strömungsmedium durch einen Radialspalt zwischen der Ringwand und der Schaufelspitze weitestgehend vermeidet.

Eine mit dieser Schaufel ausgestattete Strömungsmaschine weist dann einen verbesserten Wirkungsgrad auf.

Gemäß einer ersten vorteilhaften Ausgestaltung der Erfindung sind zumindest einige der Dichtelemente oder gar alle als Kugeln ausgebildet. Vorzugsweise können die Kugeln dabei aus einem hochoxidationsbeständigen Material oder auch aus einer Keramik hergestellt sein. Unter Fliehkraft ragt dann nur ein segmentförmiger Abschnitt der Kugel aus der Nut heraus. Dieser segmentförmige Abschnitt ist stets kleiner als die Hälfte der Kugel. Mithin ist der Abstand der Nutöffnung kleiner als der Durchmesser der betreffenden Kugel. Für den Fall, dass die Kugeln an besagter Ringwand anstreifen, ist im ersten Kontaktmoment eine vergleichsweise geringe Kontaktfläche vorhanden, was besonders reibungsarm ist. Da die als Kugeln ausgeformten Dichtelemente unter der Fliehkrafteinwirkung bei Kontakt mit der Ringwand aus ihrer radial äußersten Lage in Richtung des Schaufelfußes bewegt sind, tauchen diese bei weiter vermindertem Radialspalt in den dafür vorgesehenen Freiraum der Nut ein, wobei währenddessen weiterhin eine effiziente Abdichtung des Radialspalts gewährleistet werden kann.

Es hat sich als zweckmäßig erwiesen, wenn die Querschnittskontur der Nut ebenfalls ringförmig ist. In diesem Fall kann die Nut mit einem kugeligen Fräser in einem einzigen Arbeitsschritt hergestellt werden, wobei der Kugelfräser und somit auch die Nut einen maximalen Durchmesser aufweist, welcher so groß gewählt ist, dass die darin eingesetzte Kugel im Bezug auf die Radialrichtung mit Spiel sitzt. Bei einer im Querschnitt kugeligen Kontur der Nut weist der Durchmesser der Nut eine Größe auf, die etwa um das 1,2fache größer ist als der Durchmesser der darin sitzenden Kugeln.

Gemäß einer weiteren vorteilhaften Ausgestaltung sind zumindest einige der Dichtelemente zylindrisch ausgebildet, die dann in einem sich geradlinig erstreckenden Abschnitt der Nut angeordnet sind. Diese Ausgestaltung ist insbesondere dann von Vorteil, wenn die Schaufelspitze Abschnitte aufweist, die senkrecht zur Drehrichtung der Schaufel - in Einbaulage - orientiert sind. Dies hat den Vorteil, dass die Radialspaltverluste weiter minimiert werden können, verglichen bei derjenigen Ausführungsform, bei der die Dichtelemente als Kugeln ausgebildet sind.

Um einen Verlust von Dichtelementen während des Betriebs der Strömungsmaschine mit einer gattungsgemäßen Schaufel zu verhindern, ist eine zum Befüllen der Nut mit Dichtelementen erforderliche Öffnung durch ein Verschlusselement verschlossen. Dabei kann das Verschlusselement entweder durch Löten oder durch Schweißen oder anderweitig an der Schaufel befestigt sein.

Die Erfindung ist selbstverständlich anwendbar bei Schaufeln, die keine Anstreifkante aufweisen. Für den Fall, dass die Schaufelblattspitze als Verlängerung der Saugseitenwand und/oder der Druckseitenwand eine Anstreifkante aufweist, wird die Schaufelspitzenfläche von der radial nach außen weisenden Fläche der Anstreifkante gebildet, in welcher besagten Schaufelspitzenfläche die Nut sitzt.

Erfindungsgemäß kann die Schaufel als Verdichterschaufel oder als Turbinenschaufel ausgestaltet sein.

Insgesamt betrifft die Erfindung eine Laufschaufel für eine axial durchströmte Strömungsmaschine, umfassend einen Schaufelfuß zur Befestigung der Laufschaufel an einem Schaufelträger der Strömungsmaschine und umfassend ein aerodynamisch gekrümmtes Schaufelblatt, welches sich in Spannweiterichtung von einem fußseitigen Ende zu einer frei endenden Schaufelspitze und in eine quer dazu angeordnete Umströmungsrichtung sich von einer Vorderkante zu einer Hinterkante erstreckt, wobei die Schaufelspitze eine - im Bezug auf die Einbaulage der Laufschaufel - radial nach außen weisende Blattspitzenfläche aufweist, in der zumindest eine Hinterschneidungen aufweisende Nut vorgesehen ist, wobei die Nut sich zumindest teilweise zwischen der Vorderkante und der Hinterkante erstreckt und in der eine Anzahl von Dichtelementen angeordnet ist. Um eine langlebige und verschleißarme Laufschaufel anzugeben, deren Einsatz weiterhin zu geringen Radialspaltverlusten führt, ist vorgesehen, dass die Dichtelemente unter Fliehkrafteinwirkung aus der Nut herausragend von den Hinterschneidungen radial gehalten sind, wobei die Dichtelemente und die Nut geometrisch derart aufeinander abgestimmt sind, dass die Dichtelemente aus dieser Lage in Richtung des Schaufelfußes bewegbar sind.

Weitere Vorteile und Merkmale der Erfindung werden anhand eines Ausführungsbeispiels näher erläutert. Es zeigen:
- FIG 1: die perspektivische Ansicht auf eine Spitze einer Laufschaufel einer axialen Strömungsmaschine und
- FIG 2: einen Ausschnitt aus einem Querschnitt durch die Laufschaufelspitze gemäß FIG 1.

In allen Figuren sind identische Merkmale mit den gleichen Bezugszeichen versehen.

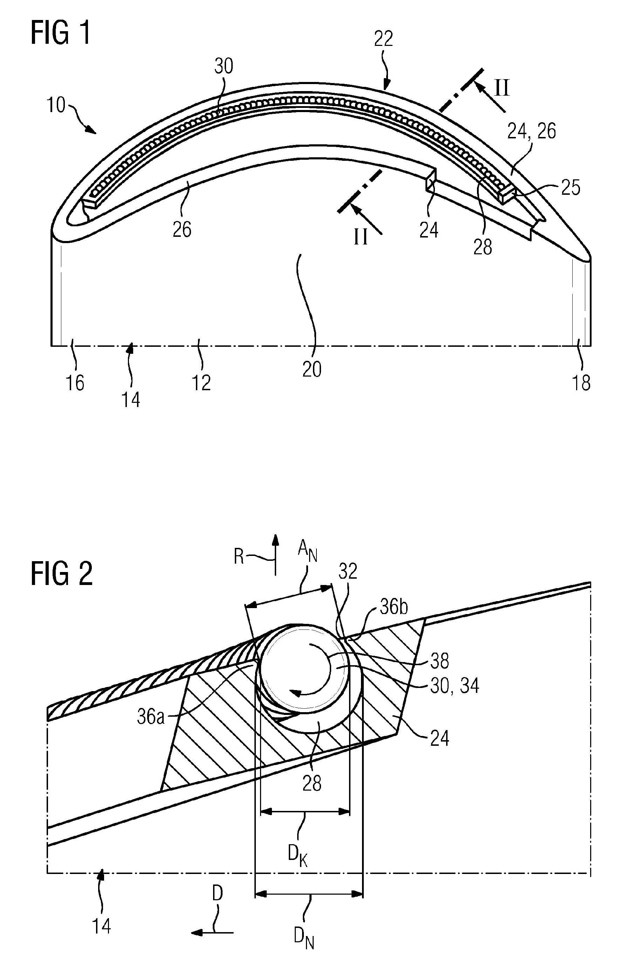

FIG 1 zeigt in perspektivischer Darstellung lediglich die Spitze 10 eines Schaufelblatts 12 einer Laufschaufel 14. Bei der dargestellten Laufschaufel 14 handelt es sich um eine Turbinenlaufschaufel. Die Turbine, in der die gezeigte Laufschaufel 14 eingesetzt werden kann, kann sowohl als Gasturbine als auch als Dampfturbine ausgestaltet sein. Alternativ dazu kann die Strömungsmaschine auch als Verdichter ausgestaltet sein. Die dargestellte Laufschaufel 14 umfasst einen nicht erweitert dargestellten Schaufelfuß zur Befestigung an einem Rotor der Strömungsmaschine. Das dargestellte Schaufelblatt 12 erstreckt sich in Spannweiterichtung von einem nicht dargestellten fußseitigen Ende zu der frei endenden Schaufelspitze 10 und in einer quer dazu angeordneten Umströmungsrichtung von einer Vorderkante 16 zu einer Hinterkante 18. Im gezeigten Ausführungsbeispiel ist sowohl druckseitig (20) als auch saugseitig (22) eine Anstreifkante 24 vorgesehen, die - in Bezug auf die Einbaulage der Laufschaufel 14 - jeweils eine radial nach außen weisende Blattspitzenfläche 26 aufweisen. In der saugseitig angeordneten Anstreifkante 24 ist zumindest eine Nut 28 vorgesehen, in der eine Anzahl von Dichtelementen 30 aneinandergereiht sind. Im dargestellten Ausführungsbeispiel ist die Nut 28 durch Fräsen hergestellt worden und erstreckt sich über einen Großteil der saugseitigen Anströmkante 24. Eine zum Befüllen der Nut 28 erforderliche Öffnung ist durch ein angeschweißtes Verschlusselement 25 verschlossen.

FIG 2 zeigt den Schnitt durch eine saugseitige Anstreifkante 24 der Laufschaufel 10 im Detail.

Aus beiden Figuren 1 und 2 ist erkennbar, dass die Dichtelemente 30 in Form von Kugeln 34 ausgeführt sind. Aus FIG 2 geht hervor, dass die Nut 28 eine im Wesentlichen kreisbogenförmige Kontur mit konstantem Radius aufweist, deren Bogenlänge in etwa 270° beträgt. Der Durchmesser der kreisbogenförmigen Nut 28 ist in Fig. 2 mit D_{N} bezeichnet. Der Abstand der beiden einander zugewandten Seitenwände der Nut 28 an der Nutöffnung 32 ist mit AN bezeichnet. Der Abstand AN ist geringer als der Durchmesser D_{N}. In der Nut 28 sind die Kugeln 34 angeordnet, deren Durchmesser D_{K} kleiner ist als der Durchmesser D_{N} der Nut 28. Jedoch ist der Durchmesser D_{K} der Kugeln 34 größer als der Abstand AN der Nutöffnung 32. Damit ist verhindert, dass die Kugeln unter Fliehkrafteinwirkung in Richtung R die Nut 28 verlassen können. Aufgrund der gewählten Nutgeometrie weist die Nut 28 zwei Hinterschneidungen 36a, 36b auf, die das Verlassen der Kugeln 34 in Radialrichtung verhindern. Im gezeigten Ausführungsbeispiel gemäß FIG 2 gibt der Pfeil D die Drehrichtung der Laufschaufel 14 an, wenn eine damit ausgestattete Strömungsmaschine damit betrieben wird. Wenn es während dieser Drehbewegung zu einem Anstreifereignis kommt, werden die Kugeln 34 gemäß des Pfeil 38 gedreht, weswegen die Hinterschneidung 36b nicht spitzwinklig endet, sondern über einen Radius abgerundet ist. Dies vermindert Verschleiß an den Kugeln 34.

Anstelle der kreisbogenförmigen Nut 28 mit konstantem Radius kann die Nut 28 natürlich auch andere Formen mit verengter Nutöffnung 32, insbesondere eine elliptische oder langlochförmige Kontur aufweisen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Laufschaufel (14) für eine axiale Strömungsmaschine, umfassend einen Schaufelfuß zur Befestigung an einem Schaufelträger der Strömungsmaschine und
umfassend ein aerodynamisch gekrümmtes Schaufelblatt (12), welches sich in Spannweitenrichtung von einem fußseitigem Ende zu einer frei endenden Schaufelspitze (10) und in einer quer dazu angeordneten Umströmungsrichtung sich von einer Vorderkante (16) zu einer Hinterkante (18) erstreckt, wobei die Schaufelspitze (10) eine - in Bezug auf die Einbaulage der Laufschaufel - radial nach außen weisende Blattspitzenfläche (26) aufweist, in der eine Hinterschneidungen aufweisende Nut 28 vorgesehen ist, die sich zumindest teilweise zwischen der Vorderkante (16) und der Hinterkante (18) erstreckt und in der eine Anzahl von Dichtelementen (30) angeordnet ist,
**dadurch gekennzeichnet, dass**
die Dichtelemente (30) unter Fliehkrafteinwirkung aus der Nut (28) herausragend von den Hinterschneidungen (36a, 36b) radial gehalten sind, wobei die Dichtelemente (30) und die Nut (28) geometrisch derartig aufeinander abgestimmt sind, dass die Dichtelemente (30) aus dieser Lage in Richtung des Schaufelfußes bewegbar sind.

2. Laufschaufel (14) nach Anspruch 1,
bei der zumindest einige der Dichtelemente (30) als Kugeln (34) ausgebildet sind.

3. Laufschaufel (14) nach Anspruch 1 oder 2,
bei der zumindest einige der Dichtelemente (30) zylindrisch sind, die in einem sich geradlinig erstreckenden Abschnitt der Nut (28) angeordnet sind.

4. Laufschaufel (14) nach Anspruch 1, 2 oder 3,
bei der die Dichtelemente (30) aus einem hoch-oxidationsfesten Material oder aus einem keramischen Material gefertigt sind.

5. Laufschaufel (14) nach einem der Ansprüche 1 bis 4,
bei der eine zum Befüllen der Nut (28) mit Dichtelementen (30) erforderliche Öffnung durch ein Verschlusselement (25) verschlossen ist.

6. Laufschaufel (14) nach einem der Ansprüche 1 bis 5,
die blattspitzenseitig eine Anstreifkante (24) aufweist und die Blattspitzenfläche (26) von der radial nach außen weisenden Fläche der Anstreifkante (24) gebildet ist.

7. Laufschaufel (14) nach einem der Ansprüche 1 bis 6, ausgebildet als Verdichterschaufel oder als Turbinenschaufel.
